# EUROPEAN PATENT SPECIFICATION

(11) **EP 3 140 567 B1**
(45) Date of publication and mention of the grant of the patent: **12.09.2018**
(21) Application number: 15722977.4
(22) Date of filing: 05.05.2015
(51) Int. Cl.: F16G 5/16

(54) **TRANSVERSE MEMBER FOR A DRIVE BELT FOR A CONTINUOUSLY VARIABLE TRANSMISSION AND A DRIVE BELT PROVIDED THEREWITH**
QUERELEMENT FÜR EINEN ANTRIEBSRIEMEN FÜR EIN STUFENLOSES GETRIEBE UND ANTRIEBSRIEMEN DAMIT
ÉLÉMENT TRANSVERSAL DESTINÉ À UNE COURROIE D'ENTRAÎNEMENT POUR TRANSMISSION À VARIATION CONTINUE ET COURROIE D'ENTRAÎNEMENT POURVUE DE CELUI-CI

(30) Priority: 06.05.2014 NL 1040791
(43) Date of publication of application: 15.03.2017
(73) Proprietor: Robert Bosch GmbH, 70442 Stuttgart (DE)
(72) Inventor: BRANDSMA, Arjen, NL-5045 WN Tilburg (NL); VAN DER MEER, Cornelis Johannes Maria, NL-5032 XG Tilburg (NL); VAN TREIJEN, Adrianus Antonius Jacobus Maria, NL-4811 VS Breda (NL)
(74) Representative: Plevier, Gabriel Anton Johan Maria
(86) International application number: PCT/EP2015/059885
(87) International publication number: WO 2015/169817

(56) References cited:
- JP-A- S6 078 134
- JP-A- S59 103 051
- JP-U- H0 281 948

## Description

The present disclosure relates to a metal drive belt for a continuously variable transmission with two pulleys for accommodating the drive belt between the, at least partly conical pulley sheaves thereof. The known drive belt comprises an endless, i.e. ring-shaped carrier that is composed of at least one, but typically of a set of nested, flexible metal rings and a number of metal transverse members that together form an essentially contiguous row along the circumference of the endless carrier. Each transverse member includes a predominantly width-wise or axially extending base part with an, at least effectively, trapezoidal outline and two pillar parts that each extend from a respective axial side of the base part in a direction essentially perpendicular to the aforementioned axial and circumferential directions of the drive belt, i.e. in radial direction. Each transverse member thus defines a centrally located opening between the pillar parts and the base part thereof, wherein a small circumferential section of the endless carrier is accommodated. The base part and the pillar parts are integral parts of the known transverse member. Such a drive belt with effectively V-shaped transverse members is known from, for example, the European patent publication No. EP-1219860-A, in particular figure 6 thereof.

In the base part of the transverse members, on a front main surface thereof, a so-called tilting zone is provided. The tilting zone is an axially extending transition between a radially outer section of the transverse member of essentially constant thickness, i.e. dimension in the said circumferential direction, and an radially inner section thereof that, at least effectively, tapers in radial inward direction. Such tilting zone and tapered inner section of the transverse member allow adjacent transverse members to mutually tilt in a curved trajectory part of the drive belt in the transmission, while these adjacent transverse members remain in direct contact through, at least, an axially oriented line of contact located in the tilting zone.

Further, in the top part of the transverse member, a projection is provided that protrudes from the front main surface essentially in the said circumferential direction. In the drive belt the projection is inserted in a recess provided in an opposite, i.e. rear main surface of an adjacent transverse member in the drive belt. Such projection and recess serve to prevent, or at least limit, a relative movement between adjacent transverse members in the row of transverse members of the drive belt, at least in radial direction, but typically also in axial direction.

On either axial side of the transverse member a contact surface is provided for frictionally engaging a pulley sheave of the transmission pulleys. These pulley contact surfaces are mutually oriented at an angle, denoted the belt angle, that matches, at least by approximation, an angle defined by and between the conical pulley sheaves of the pulleys, which latter angle is denoted the pulley angle. Furthermore, these pulley contact surfaces either are corrugated or are provided with a substantial surface roughness, such that only the peaks of the corrugation profile or surface roughness arrive in contact with the pulley sheave. This particular feature provides that cooling oil that is applied in the known transmission can be accommodated in the valleys of the said corrugation profile or surface roughness, thus improving the friction between the drive belt and the transmission pulleys.

During operation in the transmission, the transverse members of the drive belt that are located between the pulley sheaves of a driving pulley of the transmission are driven in the direction of rotation thereof by friction forces being exerted by these pulley sheaves on the pulley contact surfaces of these transverse members. These driven transverse members in turn push preceding ones along the circumference of the endless carrier of the drive belt and, thereby, rotationally drive the driven pulley of the transmission, again by friction.

In order to generate such friction (force) between the transverse members and the pulley sheaves of the transmission pulleys to build up, the pulley sheaves of a pulley are forced towards one another in axial direction, whereby these exert mutually opposed pinching force on the transverse members in the axial direction thereof.

It has been observed that under the influence of these pinching forces, the transverse members can elastically deform to a substantial extent, in particular in case the pulley contact surfaces thereof the transverse member extend from the base part into the pillar parts thereof, such as is taught by EP-1219860-A. This (cyclically occurring) deformation may not necessarily be detrimental to the operation of the transmission, however, in the presently considered all metal drive belt, premature failure due to metal fatigue of the transverse members may occur.

Therefore, in practically feasible embodiments of the known drive belt, the extent of the pulley contact faces is normally limited to only marginally beyond the base part of the transverse members.

It is an object of the present disclosure to provide for a novel design of the transverse member that embodies an improvement in terms of the load carrying capacity of thereof, when departing from the generally V-shaped transverse member.

At least from JP H02 81948 U it is known to provide the transverse member with a support beam that is fitted, as a separate component of the transverse member, between the pillar parts thereof to the radial outside of the endless carrier. The known support beam is provided as a separate part of the transverse member after the endless carrier has been inserted between the pillar parts thereof. The support beam is designed to fit between the pillar parts.

According to the present disclosure, the support beam is at least slightly thinner than the pillar parts, while being attached thereto by any suitable means, such as welding or gluing or possibly an interference fit there between or a mutually interlocking shape thereof. As a result thereof, in the straight section of the drive belt's trajectory in the transmission where it crosses over between the pulleys, the adjacent transverse members arrive in physical contact through their respective pillar parts, instead of (also) through their respective support beams. This has the advantage that the support beam and in particular the attachment (means) thereof with the pillar parts is not loaded and/or stressed by the pushing force that is exerted by and between the transverse members, at least not directly.

The support beam allows the pulley contact faces of the transverse members to extend beyond the base part thereof into the pillar parts, since the pinching force is supported not only by the base part to the inside of the endless carrier, but also to the outside thereof by the support beam.

Ideally, the support beam and the base part of the transverse member are designed to elastically compress equally under the influence of the pinching force. In this manner the belt angle is favourably unaffected thereby. In particular in this respect, the value of a cross sectional surface area times the Young's modulus of the support beam and that of the base part are made equal, in which case the support beam and the base part respectively accommodate equal parts of the pinching force.

Alternatively, the support beam may be designed to accommodate the majority of the pinching force, in particular by being designed with a larger cross sectional surface area and/or a higher Young's modulus than that/those of the base part. This has the advantage that the radial extent of the base part can be decreased, thus allowing the drive belt to be located between the pulley sheaves closer to the rotational centre thereof, whereby the range of transmission ratios that is provided by transmission favourably increases without increasing the transmission size.

Preferably, the pillar parts are provided with locating means for accurately locating to support beam in radial direction relative to the base part. This has the advantage that a clearance there between in radial direction, in which clearance the endless carrier is located, is accurately defined. By such clearance a rotational freedom of the transverse members relative to the endless carrier is favourably controlled, in particular limited, such that the above-described projection and recess of the conventional transverse member may become superfluous.

The invention will now be explained by way of example on the basis of the description below with reference to the drawing, in which:
- figure 1 is a simplified and schematic side elevation of a transmission with two pulleys and a drive belt;
- figure 2 illustrates the known drive belt with generally V-shaped transverse members in a cross-section thereof facing in its circumference direction and also includes a separate side elevation of only the transverse member thereof;
- figure 3 schematically illustrates a technical limitation of the known transverse member;
- figure 4 illustrates a first, novel embodiment of the transverse member according to the present disclosure;
- figure 5 illustrates the first, novel embodiment of the transverse member as incorporated in the drive belt;
- figure 6 schematically illustrates two steps in the assembly of the drive belt incorporating the novel transverse member;
- figure 7 illustrates a second, novel embodiment of the transverse member according to the present disclosure;
- figure 8 illustrates a third, novel embodiment of the transverse member according to the present disclosure; and
- figure 9 illustrates a fourth, novel embodiment of the transverse member according to the present disclosure.

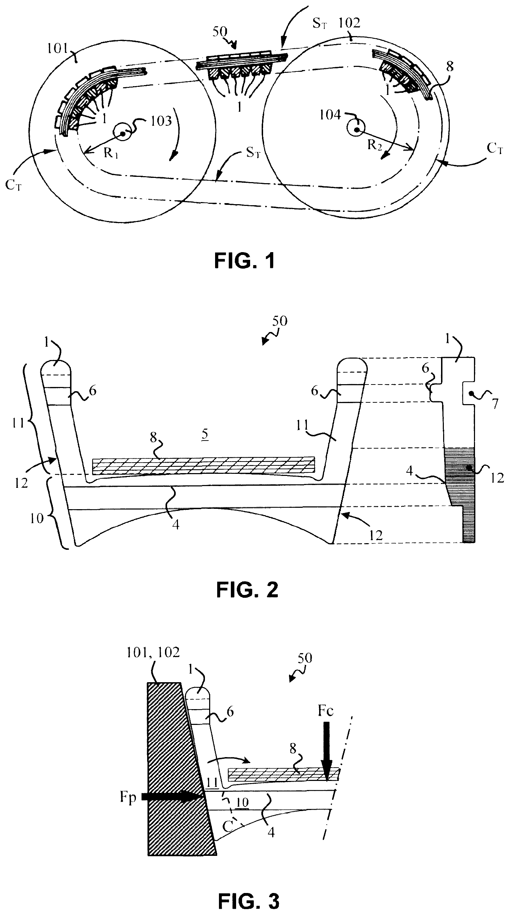

Figure 1 schematically shows the central parts of a continuously variable transmission for use in a driveline of, for example, passenger motor vehicles. This transmission is well-known per se and comprises at least a first variable pulley 101 and a second variable pulley 102. In the driveline, the first pulley 101 is coupled to and driven by an engine and the second pulley 102 is typically coupled to driven wheels of the motor vehicle via a number of gears.

Both transmission pulleys 101, 102 comprise a first conical pulley sheave that is fixed to a pulley shaft 103, 104 of the respective pulley 101, 102 and a second conical pulley sheave that is axially displaceable relative to the respective pulley shaft 103, 104 and that is fixed thereto only in rotational direction. A drive belt 50 of the transmission is wrapped around the pulleys 101, 102, while being accommodated between the pulley sheaves thereof. As appears from figure 1, the trajectory of the drive belt 50 in the transmission includes two straight sections S_{T} and two curved sections C_{T} where the drive belt 50 is curved around a respective one of the two transmission pulleys 101, 102. During operation of the transmission, the drive belt 50 is pinched by and between the pulley sheaves of both pulleys 101, 102 and thus provides a rotational connection there between by means of friction. To this end, electronically controllable and hydraulically acting movement means that act on the respective moveable pulley sheave of each pulley 101, 102 are provided in the transmission (not shown). In addition to exerting a pinching force on the drive belt 50, these movement means also control respective radial positions R1 and R2 of the drive belt at the pulleys 101, 102 and, hence, the speed ratio that is provided by the transmission between the pulley shafts 103, 104 thereof.

The known drive belt 50 is composed of an endless carrier 8 and a plurality of transverse members 1 that are mounted on the endless carrier 8 along the circumference thereof in an, at least essentially, contiguous row. In the drive belt 50 the transverse members 1 are movable along the circumference of the endless carrier 8, which endless carrier 8 is typically composed of a number of flexible metal rings or bands, which metal bands are stacked one around one another, i.e. are mutually nested.

In figure 2 the drive belt 50 is illustrated in one of many known embodiments thereof. On the left side of figure 2 the drive belt 50 is shown in cross-section and on the right side of figure 2 a side elevation of the drive belt 50 is included. From figure 2 it appears that the transverse members 1 of the drive belt 50 are generally shaped similar to the letter "V", i.e. are generally V-shaped, whereby an angle between the sides of the transverse members 1 is design to closely match an angle present between the conical pulley sheaves of the transmission pulleys 101, 102.

The known transverse member 1 comprises a base parts 10 and two pillar parts 11, whereof the base part 10 extends in the axial direction of the drive belt 50 and whereof the pillar parts 11 extend in the radial direction of the drive belt 50, each from a respective axial side of the base part 10. In its thickness direction, the transverse member 1 extends between a front main face 3 and a rear main face 4 thereof that are both oriented, at least generally, in the circumference direction of the drive belt 50. Between the pillar parts 11 and the base part 10 of the transverse member an opening 5 is defined, wherein a small circumferential section of the endless carrier 8 is accommodated.

In the base part 10 of the transverse member 1 a so-called tilting zone 4 is provided in its front main face 3. This tilting zone 4 represents an axially extending transition between a radially outer section of the transverse member of essentially constant thickness and a radially inner section thereof that is tapered in radial inward direction. Typically, the tilting zone 4 is smoothly, convexly curved. When adjacent transverse members 1 are tilted relative to one another in the curved section C_{T} of the drive belt 50, these (can) remain in contact at the location of the tilting zone 4.

In each pillar part 11 of the transverse member 1 a projection 6 is provided that protrudes from the front main surface 3 in, essentially, the said circumference direction. In the drive belt 50, the projection 6 is inserted in a recess 7 provided in the opposite, i.e. rear main face 3 of an adjacent transverse member 1 to limit a relative movement between the adjacent transverse members 1.

On the axial sides thereof, the transverse member 1 is provided with contact surfaces 12 for contacting (the pulley sheaves of) the transmission pulleys 101, 102. In the design of the transverse member 1 according to figure 2, these pulley contact surfaces 12 are corrugated and extend in radial direction over essentially the full extent, i.e. height of the base part 10 and over part (in this particular case, approximately one third) of the radial extent of the respective pillar part 11 to radially beyond the endless carrier 8.

In the design of the transverse member 1 according to figure 2 and under the influence of forces Fc and Fp that are cyclically exerted thereon during operation of the transmission, respectively by the endless carrier 8 and by the transmission pulleys 101, 102, the mechanical stress concentrates, in particular, at the transition between the pillar parts 11 and the base part 10. This cyclically occurring stress concentration can cause the ultimate fracture of the transverse member 1 due to metal fatigue, as schematically illustrated in figure 3 by the dashed crack-line C.

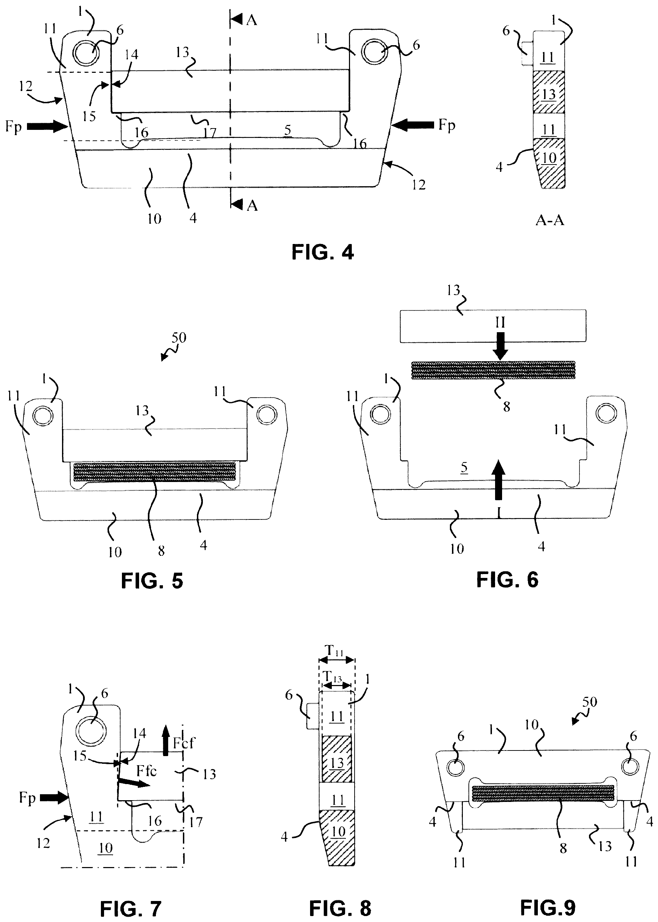

A first embodiment of the novel transverse member 1 according to the present disclosure is shown in figure 4 both in a front elevation and in a cross-section A-A thereof. In this novel transverse member 1 a support beam 13 is located between the pillar parts 11 thereof. As a result the opening 5 defined by the transverse member 1 is bound not only in radial inward direction by the base part 10 and in both axial directions by the pillar parts 11, but also in radial outward direction by the support beam 13. More importantly within the context of the present disclosure, the pulley pinching force Fp is supported not only by the base part 10 of the novel transverse member 1 but also by the said support beam 13 thereof. As a result, the said stress concentration at the transition between the pillar parts 11 and the base part 10 is reduced considerably and the fatigue strength of the transverse member 1 is improved considerably.

To optimally make use of the novel transverse segment 1, the extent of the pulley contact surfaces 12 in radial direction essentially covers the extent of both the base part 10 and the support beam 13 in that direction. This particular design feature of the novel transverse segment 1 is illustrated by the upper dashed line in figure 4 that indicates the radial outer edge of both the pulley contact surfaces 12 and the support beam 13.

In order to simply and accurately determine the placement of the support beam 13 relative to the pillar and base parts 10, 11 of the transverse member 1, at least the pillar parts 11 thereof are preferably being provided with a axially extending stop 16 that engages a bottom surface 17 of the support beam 13. These stops 16 thus determine an ultimate radial inward placement of the support beam 13 relative to the base part 10 of the transverse member 1.

In order to prevent that the support beam 13 separates from the other parts 10, 11 of the transverse member 1 under the influence of, for instance, gravity or centrifugal force, one of many known connecting means can be applied, such as gluing, welding, a mutually interlocking design thereof or an interference fit. In the latter case, an oversize of a length of the support beam 13 relative to a nominal axial distance in-between the pillar parts 11 in the range from 10 to 100 micron was found to be suitable for reliably fixing the support beam 13 relative to the pillar parts 11, within an acceptable elastic deformation of these pillar parts 11. Applicable. Preferably, in this respect, such oversize is around 50 microns, at least on average between the transverse members 1 of the drive belt 50.

A lateral end surface 14 of the support beam 13 and a side surface 15 of the respective pillar part 11 contacting it, which end surface 14 and side surface 15 carry the load between these two components 13, 11 of the transverse members 1, are preferably aligned with the radial direction, i.e. essentially perpendicular to the pinching force Fp.

In figure 5 the above, first embodiment of the novel transverse member 1 according to the present disclosure is represented in a cross-section of the drive belt 50. In the drive belt the endless carrier 8 is contained in radial outward direction by the support beam 13.

Figure 6 schematically illustrates the assembly of the drive belt 50 incorporating the novel transverse member 1 according to the present disclosure. In particular, in a first step I of the drive belt assembly, the endless carrier 8 is located in the opening 5 of transverse members 1 by placing these transverse members 1 around the endless carrier 8 from the radial inside thereof. In a second step II of the drive belt assembly, the support beams 13 are placed between the pillar parts 11 of the transverse members 1 from the radial outside of the endless carrier 8.

In figure 7 a second embodiment of the transverse member 1 according to the present disclosure is shown. In this second embodiment of the novel transverse member 1 the lateral end surface 14 of the support beam 13 and the side surface 15 of the respective pillar part 11 contacting it, are inclined in radial outward direction towards a middle of the transverse member 1, such that a force component Ffc of the pulley pinching force Fp is generated that such that a force component Ffc is generated that, at least partly, counteracts the said centrifugal force Fcf, at least in part. However, in order to minimise a bending of the pillar parts 11 when the support beam 13 is inserted there between in drive belt assembly, an angle of inclination of the lateral end surfaces 14 of the support beam 13 relative to the radial direction amounts to 5 degrees at most and, preferably, has a value in the range between 0.5 to 1.5 degree.

In figure 8 a third embodiment of the transverse member 1 according to the present disclosure is shown in a cross-section thereof corresponding to the cross-section A-A in figure 4. In this third embodiment of the novel transverse member 1 a thickness dimension T₁₃ of the support beam 13 is less than a thickness dimension T₁₁ of the pillar parts 11. In this third embodiment the adjacent transverse members 1 the drive belt 50 arrive in physical contact through their respective pillar parts 11 (only), instead of (also) through their respective support beam 13. This particular design feature comes with the advantage that the attachment between the pillar parts 11 and the support beam 13 is not heavily loaded in the plane of the lateral end surface 14 of the support beam 13 and the side surface 15 of the respective pillar part 11. In other words, the attachment there between cannot be sheared-off due to the pushing forces exerted between the transverse members 1 during operation of the drive belt 50.

In figure 9 a fourth embodiment of the transverse member 1 according to the present disclosure is shown. In this fourth embodiment of the novel transverse member 1 the base part 10 and the support beam 13 are positioned on the opposite radial side of the endless carrier 8 relative to the first three embodiments thereof described hereinabove. In particular the support beam 13 is located on the radial inside and the base part 10 is located on the radial outside of the endless carrier 8. It is noted that the design features that are illustrated in figures 7 and 8 of the present disclosure are applicable to this fourth embodiment as well.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention (s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. Transverse member (1) for a drive belt (50) for use in a continuously variable transmission, such as is applied in a drive train of a motor vehicle for passenger transport, which transverse member (1) comprises at least a base part (10) and two pillar parts (11), which pillar parts (11) extend from a respective lateral side of the base part (10) in a mutually corresponding direction, and which the transverse member (1) also comprises a separate support beam (13) that extends between the two pillar parts at some distance of the base part (10) with lateral end surfaces (14) of the support beam (13) contacting side surface parts (15) of the pillar parts (11), which contacting end surfaces (14) and side surface parts (15) are oriented predominantly in parallel, preferably, perpendicular to the transverse, i.e. width, direction of the base part (10), **characterised in that** a thickness dimension (T13) of the support beam between said lateral surfaces in a thickness direction perpendicular to a direction wherein the pillar parts (11) extend from base part (10) to the support beam (13) is smaller than a thickness dimension (T11) of each pillar part (11) in said thickness direction.

2. The transverse member (1) according to claim 1, **characterised in that** the two pillar parts (11) extend to beyond the support beam (13) as seen in the direction from the base part (10) to the support beam (13).

3. The transverse member (1) according to claim 1 or 2, **characterised in that** the transverse member (1), on either lateral side thereof, is provided with a pulley contact surface (12) destined for friction contact with a pulley (101, 102) of the continuously variable transmission, which pulley contact surfaces (12) extend from the base part (10) into the pillar parts (11) to an outer edge of the support beam (13) facing away from the base part (11).

4. The transverse member (1) according to a preceding claim, **characterised in that**, the multiplication of the respective cross-sectional surface area and the respective Young's modulus of elasticity of the support beam (13) and of the base part (10) correspond, at least approximately.

5. The transverse member (1) according to a preceding claim, **characterised in that** the support beam (13) is clamped by and between the two pillar parts (11).

6. The transverse member (1) according to a preceding claim, **characterised in that** the support beam (13) is attached to the pillar parts (11), for example is glued or welded thereto.

7. The transverse member (1) according to one or more of the claims 1 to 6, **characterised in that** side surface parts (15) of the pillar parts (11) that are in contact with the lateral end surfaces (14) of the support beam (13) are predominantly facing one another, while being oriented at a angle of not more than 5 degrees, preferably at an angle in the range between 0.5 and 1.5 degrees, relative to a direction perpendicular to the transverse, i.e. width, direction of the base part (10).

8. The transverse member (1) according to a preceding claim, **characterised in that** the pillar parts (11) are provided with stops (16) that extend on and under an inner edge of the support beam (13) facing towards the base part (11).

9. The transverse member (1) according to a preceding claim, **characterised in that** the pillar parts (11) are each provided with a projection (6) located beyond an outer edge of the support beam (13) facing away from the base part (11) as seen in a direction from the base part (11) toward the support beam (13).

10. Drive belt (50) for use in a continuously variable transmission, such as is applied in a drive train of a motor vehicle for passenger transport, which drive belt (50) comprises an endless carrier (8) and a number of transverse members (1) according to one or more of the preceding claims 1-9, **characterised in that** the material and the dimensions of the base part (10) and of the support beam (13) are mutually adapted to realise an equal amount of elastic compression thereof during operation of the drive belt (50), at least approximately.

11. The drive belt (50) according to claim 10, **characterised in that** a thickness dimension (T₁₃) of the support beam between said lateral surfaces (13) in circumference direction of the drive belt (50) is smaller than a thickness dimension (T₁₁) of the pillar parts (11) **in that** direction.

12. The drive belt (50) according to claim 10 or 11, **characterised in that** a dimension of the support beam (13) in radial direction is at least equal to, and preferably is larger than a radial dimension of the base part (10).

13. The drive belt (50) according to claim 10, 11 or 12, **characterised in that** the base part (10) is located radially inside the endless carrier (8) and **in that** the support beam (13) is located radially outside the endless carrier (8).

## Patentansprüche

1. Querelement (1) für einen Antriebsriemen (50) zur Verwendung in einem stufenlosen Getriebe, wie in einem Antriebsstrang eines Kraftfahrzeugs zur Personenbeförderung verwendet, wobei das Querelement (1) wenigstens ein Basisteil (10) und zwei Säulenteile (11) umfasst, wobei sich die Säulenteile (11) von einer entsprechenden Querseite des Basisteils (10) in einer gegenseitig entsprechenden Richtung erstrecken und wobei das Querelement (1) außerdem einen separaten Stützbalken (13) umfasst, der sich zwischen den zwei Säulenteilen in einiger Entfernung von dem Basisteil (10) erstreckt, wobei Querendflächen (14) des Stützbalkens (13) Seitenflächenteile (15) der Säulenteile (11) berühren, wobei die sich berührenden Endflächen (14) und Seitenflächenteile (15) in erster Linie parallel, vorzugsweise rechtwinklig zur Querrichtung, d.h. zur Breitenrichtung des Basisteils (10), ausgerichtet sind, **dadurch gekennzeichnet, dass** eine Dickenabmessung (T13) des Stützbalkens zwischen den Querflächen in einer Dickenrichtung, die rechtwinklig zu einer Richtung verläuft, in der sich die Säulenteile (11) von dem Basisteil (10) zu dem Stützbalken (13) erstrecken, kleiner als eine Dickenabmessung (T11) jedes Säulenteils (11) in der Dickenrichtung ist.

2. Querelement (1) nach Anspruch 1, **dadurch gekennzeichnet, dass** sich die zwei Säulenteile (11) über den Stützbalken (13) hinaus erstrecken, gesehen in der von dem Basisteil (10) zu dem Stützbalken (13) verlaufenden Richtung.

3. Querelement (1) nach Anspruch 1 oder 2, **dadurch gekennzeichnet, dass** das Querelement (1) auf jeder Querseite desselben mit einer Riemenscheibenkontaktfläche (12) versehen ist, die für einen Reibungskontakt mit einer Riemenscheibe (101, 102) des stufenlosen Getriebes bestimmt ist, wobei sich die Riemenscheibenkontaktflächen (12) von dem Basisteil (10) in die Säulenteile (11) und zu einer Außenkante des Stützbalkens (13) erstrecken, die sich von dem Basisteil (11) weg erstreckt.

4. Querelement (1) nach einem der vorhergehenden Ansprüche, **dadurch gekennzeichnet, dass** sich die Multiplikationen der jeweiligen Querschnittsfläche und des jeweiligen Youngschen Elastizitätsmoduls des Stützbalkens (13) und dem des Basisteils (10) wenigstens annähernd entsprechen.

5. Querelement (1) nach einem der vorhergehenden Ansprüche, **dadurch gekennzeichnet, dass** der Stützbalken (13) durch die zwei Säulenteile (11) und zwischen diesen eingeklemmt ist.

6. Querelement (1) nach einem der vorhergehenden Ansprüche, **dadurch gekennzeichnet, dass** der Stützbalken (13) an den Säulenteilen (11) angebracht ist, zum Beispiel an denselben angeklebt oder angeschweißt ist.

7. Querelement (1) nach einem oder mehreren der Ansprüche 1 bis 6, **dadurch gekennzeichnet, dass** die Seitenflächenteile (15) der Säulenteile (11), die sich in Kontakt mit den Querendflächen (14) des Stützbalkens (13) befinden, in erster Linie einander zugewandt sind, während sie in einem Winkel von höchstens 5 Grad, vorzugsweise in einem Winkel im Bereich von 0,5 bis 1,5 Grad, relativ zu einer Richtung ausgerichtet sind, die rechtwinklig zu der Querrichtung, d.h. der Breitenrichtung, des Basisteils (10) verläuft.

8. Querelement (1) nach einem der vorhergehenden Ansprüche, **dadurch gekennzeichnet, dass** die Säulenteile (11) mit Anschlägen (16) versehen sind, die sich auf und unter einer Innenkante des Stützbalkens (13) erstrecken, die dem Basisteil (11) zugewandt ist.

9. Querelement (1) nach einem der vorhergehenden Ansprüche, **dadurch gekennzeichnet, dass** die Säulenteile (11) jeweils mit einem Vorsprung (6) versehen sind, der sich außerhalb einer Außenkante des Stützbalkens (13) befindet, die von dem Basisteil (11) abgewandt ist, gesehen in einer von dem Basisteil (11) zu dem Stützbalken (13) verlaufenden Richtung.

10. Antriebsriemen (50) zur Verwendung in einem stufenlosen Getriebe, wie in einem Antriebsstrang eines Kraftfahrzeugs zur Personenbeförderung verwendet, wobei der Antriebsriemen (50) einen Endlosträger (8) und eine Anzahl von Querelementen (1) nach einem oder mehreren der vorhergehenden Ansprüche 1 bis 9 umfasst, **dadurch gekennzeichnet, dass** das Material und die Abmessungen des Basisteils (10) und des Stützbalkens (13) wenigstens annähernd gegenseitig so angepasst sind, dass während des Betriebs des Antriebsriemens (50) ein gleicher Betrag einer elastischen Kompression derselben umgesetzt wird.

11. Antriebsriemen (50) nach Anspruch 10, **dadurch gekennzeichnet, dass** eine Dickenabmessung (T₁₃) des Stützbalkens zwischen den Querflächen (13) in einer Umfangsrichtung des Antriebsriemens (50) kleiner als eine Dikkenabmessung (T₁₁) der Säulenteile (11) in dieser Richtung ist.

12. Antriebsriemen (50) nach Anspruch 10 oder 11, **dadurch gekennzeichnet, dass** eine Abmessung des Stützbalkens (13) in radialer Richtung wenigstens gleich einer radialen Abmessung des Basisteils (10) und vorzugsweise größer als diese ist.

13. Antriebsriemen (50) nach Anspruch 10, 11 oder 12, **dadurch gekennzeichnet, dass** sich das Basisteil (10) radial innen von dem Endlosträger (8) befindet und dass sich der Stützbalken (13) radial außen von dem Endlosträger (8) befindet.

## Revendications

1. Organe transversal (1) pour une courroie d'entraînement (50) pour l'utilisation dans une transmission à variation continue, telle qu'utilisée dans une chaîne cinématique d'un véhicule automobile pour le transport de passagers, lequel organe transversal (1) comprend au moins une partie de base (10) et deux parties de colonne (11), lesquelles parties de colonne (11) s'étendent depuis un côté latéral respectif de la partie de base (10) dans une direction mutuellement correspondante, et lequel organe transversal (1) comprend en outre une poutre de support séparée (13) qui s'étend entre les deux parties de colonne à une certaine distance de la partie de base (10), des surfaces d'extrémité latérales (14) de la poutre de support (13) venant en contact avec des parties de surfaces latérales (15) des parties de colonne (11), lesquelles surfaces d'extrémité (14) et parties de surface latérales (15) en contact sont orientées principalement en parallèle, de préférence perpendiculairement à la direction transversale, c'est-à-dire en largeur, de la partie de base (10), **caractérisé en ce qu'**une dimension d'épaisseur (T13) de la poutre de support entre lesdites surfaces latérales dans une direction d'épaisseur perpendiculaire à une direction dans laquelle s'étendent les parties de colonne (11) depuis la partie de base (10) jusqu'à la poutre de support (13) est inférieure à une dimension d'épaisseur (T11) de chaque partie de colonne (11) dans ladite direction d'épaisseur.

2. Organe transversal (1) selon la revendication 1, **caractérisé en ce que** les deux parties de colonne (11) s'étendent au-delà de la poutre de support (13), tel que vu dans la direction allant de la partie de base (10) à la poutre de support (13).

3. Organe transversal (1) selon la revendication 1 ou 2, **caractérisé en ce que** l'organe transversal (1), de chaque côté latéral de celui-ci, est pourvu d'une surface (12) de contact avec une poulie, prévue pour venir en contact de friction avec une poulie (101, 102) de la transmission à variation continue, lesquelles surfaces (12) de contact avec une poulie s'étendent depuis la partie de base (10) dans les parties de colonne (11) jusqu'à un bord extérieur de la poutre de support (13) tournée à l'écart de la partie de base (11).

4. Organe transversal (1) selon une revendication précédente, **caractérisé en ce que** la multiplication de la superficie en section transversale respective, et le module d'élasticité de Young respectif de la poutre de support (13) et de la partie de base (10) se correspondent au moins approximativement.

5. Organe transversal (1) selon une revendication précédente, **caractérisé en ce que** la poutre de support (13) est serrée par et entre les deux parties de colonne (11) .

6. Organe transversal (1) selon une revendication précédente, **caractérisé en ce que** la poutre de support (13) est attachée aux parties de colonne (11), par exemple est collée ou soudée à celles-ci.

7. Organe transversal (1) selon une ou plusieurs des revendications 1 à 6, **caractérisé en ce que** des parties de surfaces latérales (15) des parties de colonne (11) qui sont en contact avec les surfaces d'extrémité latérales (13) de la poutre de support (14) sont principalement en regard les unes des autres, tout en étant orientées à un angle ne dépassant pas 5 degrés, de préférence à un angle dans une plage de 0,5 à 1,5 degré, par rapport à une direction perpendiculaire à la direction transversale, c'est-à-dire en largeur, de la partie de base (10).

8. Organe transversal (1) selon une revendication précédente, **caractérisé en ce que** les parties de colonne (11) sont pourvues de butées (16) qui s'étendent sur un bord intérieur de la poutre de support (13) faisant face à la partie de base (11) et en dessus de celui-ci.

9. Organe transversal (1) selon une revendication précédente, **caractérisé en ce que** les parties de colonne (11) sont chacune pourvues d'une saillie (6) située au-delà d'un bord extérieur de la poutre de support (13) tourné à l'écart de la partie de base (11), tel que vu dans une direction allant de la partie de base (11) vers la poutre de support (13).

10. Courroie d'entraînement (50) pour l'utilisation dans une transmission à variation continue, telle qu'utilisée dans une chaîne cinématique d'un véhicule automobile pour le transport de passagers, laquelle courroie d'entraînement (50) comprend un support sans fin (8) et un certain nombre d'organes transversaux (1) selon une ou plusieurs des revendications précédentes 1 à 9, **caractérisée en ce que** le matériau et les dimensions de la partie de base (10) et de la poutre de support (13) sont adaptés les uns aux autres pour réaliser une quantité égale de compression élastique de celles-ci au cours du fonctionnement de la courroie d'entraînement (50), au moins approximativement.

11. Courroie d'entraînement (50) selon la revendication 10, **caractérisée en ce qu'**une dimension d'épaisseur (T₁₃) de la poutre de support entre lesdites surfaces latérales (13) dans la direction circonférentielle de la courroie d'entraînement (50) est inférieure à une dimension d'épaisseur (T₁₁) des parties de colonne (11) dans cette direction.

12. Courroie d'entraînement (50) selon la revendication 10 ou 11, **caractérisée en ce qu'**une dimension de la poutre de support (13) dans la direction radiale est au moins égale, et de préférence est supérieure, à une dimension radiale de la partie de base (10).

13. Courroie d'entraînement (50) selon la revendication 10, 11 ou 12, **caractérisée en ce que** la partie de base (10) est située radialement à l'intérieur du support sans fin (8) et **en ce que** la poutre de support (13) est située radialement à l'extérieur du support sans fin (8).
